Europäisches Patentamt

European Patent Office

Office européen des brevets

(11) Publication number: **0 367 135**
**A2**

# EUROPEAN PATENT APPLICATION

(21) Application number: **89119980.4**

(22) Date of filing: **27.10.89**

(51) Int. Cl.⁵: **B32B 3/12**

(30) Priority: **01.11.88 JP 276951/88**

(43) Date of publication of application:
**09.05.90 Bulletin 90/19**

(84) Designated Contracting States:
**DE FR GB IT**

(71) Applicant: **FUJI JUKOGYO KABUSHIKI KAISHA**
**7-2, Nishi-Shinjuku 1-Chome Shinjuku-Ku**
**Tokyo-To(JP)**

(72) Inventor: **Tamura, Hirobumi Fuji Jukogyo**
**Kabushiki Kaisha**
**7-2, Nishi-Shinjuku 1-Chome Shinjuku-Ku**
**Tokyo-To(JP)**
Inventor: **Hasegawa, Takahisa Fuji Jukogyo**
**Kabushiki Kaisha**
**7-2, Nishi-Shinjuku 1-Chome Shinjuku-Ku**
**Tokyo-To(JP)**

(74) Representative: **Reichel, Wolfgang, Dipl.-Ing.**
**et al**
**Reichel und Reichel Parkstrasse 13**
**D-6000 Frankfurt am Main 1(DE)**

(54) **Panel of composite material and process for producing the panel.**

(57) A composite material panel is produced by bonding in laminate configuration a plate structural member (1), a cellular or honeycomb structural member (2), a perforated sheet in the form of a filament meshwork (4). The filament meshwork (4) is previously formed by a filament winding process in which a filament roving (7) is wound helically in two opposite directions around a rotating mandrel (9) thereby to form a cylindrical meshwork, which is then cut and spread out into a desired form. The mesh size (8) of the meshwork is adjustably varied for maximum noise suppressing effect by appropriately varying the helical pitches of the windings of the roving (7).

## PANEL OF COMPOSITE MATERIAL AND PROCESS FOR PRODUCING THE PANEL

### BACKGROUND OF THE INVENTION

The present invention relates generally to panels composed of composite materials and more particularly to a composite material panel having a high degree of noise suppressing effect and to a process for producing the panel.

In general, in an aircraft, the engine is a great source of noise. For this reason, structural members and materials of high noise suppressing effect are used as much as possible for the structural body. As structural members of this character, composite material panels are known. In general a panel of this type has a laminated construction with a sheet member of plate form on the surface. A cellular structural material of honeycomb form is bonded to the inner surface of this structural member. A perforated plate is bonded as a surface material to the opposite surface of the cellular structural material. In this manner the conventional composite material panel is fabricated.

A large number of perforations of various diameters are formed in the above mentioned perforated plate for suppressing the noise. The material used for the perforated plate is a metal, for example. Another example, is porous woven composite materials (for example, as disclosed in United States Patent No. 3,913,702).

When such materials are used for the perforated plate, the raw materials, the fabricating and forming jigs, and other factors impose limitations. Thus the hole forming process or the weaving process for obtaining the required degree of perforation or porosity becomes troublesome. Consequently, there arises the problem of large difficulty in production.

Another problem arises from the fact that the degree of perforation or porosity is an important factor determining the noise suppressing effect. In a conventional composite material panel, it has been extremely difficult to adjust as desired the degree of perforation.

### SUMMARY OF THE INVENTION

Accordingly, it is an object of the present invention to provide a composite material panel in which the above problems accompanying the prior art are overcome, and which can be produced in a simple manner and affords an excellent noise suppressing effect. It is another object of the invention to provide a process for producing the composite material panel.

According to the present invention in one aspect thereof, there is provided a panel of a composite material, comprising: a structural member in the form of a plate; a cellular structural member in the form of a board, bonded at a first surface thereof to said structural member; and a perforated sheet bonded to a second surface opposite to said first surface of the cellular structural member: said perforated sheet comprising a meshwork of filaments of a composite material formed by a filament winding process in which the mesh size of said meshwork can be adjustably varied for maximum noise suppression effect.

According to the present invention in another aspect thereof, there is provided a process for producing a panel of a composite material, comprising the steps of bonding a cellular structural member at a first surface thereof to a surface of a structural member of plate form, and bonding a perforated sheet to a second surface opposite to said first surface of said cellular structural member: said process further comprising the step of forming said perforated sheet into a meshwork of filaments of the composite material by a filament winding process in which the mesh size of the meshwork is adjustably varied for maximum noise suppression effect.

By the practice of the present invention, a composite material meshwork formed by the filament winding process is used for the perforated sheet. Therefore the mesh size of the meshwork can be easily adjusted for maximum noise suppression effect. At the same time, the fabrication of the perforated sheet becomes extremely simple.

A preferred embodiment of the present invention will become understood from the following detailed description referring to the accompanying drawings.

### BRIEF DESCRIPTION OF THE DRAWINGS

FIG. 1 is an exploded perspective view of one embodiment of a composite material panel according to the present invention;

FIG. 2 is a fragmentary sectional view of the panel shown in FIG. 1;

FIG. 3 is a fragmentary plan view of the same panel, with laminar members partially stripped off to show the internal structure;

FIG. 4 is a plan view showing a composite material perforated sheet in the form of a filament meshwork;

FIG. 5 is a view for explaining a filament winding process; and

FIG. 6 is an exploded perspective view showing the laminar members of a known composite material panel.

## DETAILED DESCRIPTION OF THE PREFERRED EMBODIMENT

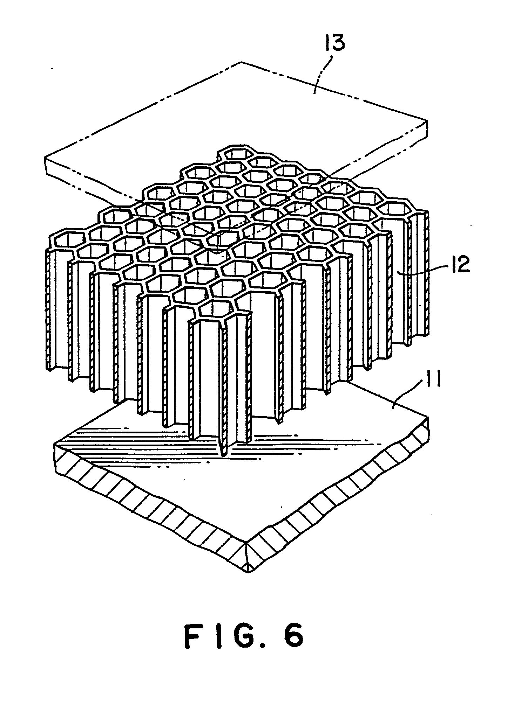

For a full understanding of the present invention, the general nature, attendant problems, and limitations of the conventional composite material panel described briefly hereinbefore will first be described with reference to FIG. 6.

As shown in FIG. 6, a cellular structural material 12 of honeycomb form is bonded to the inner surface (upper surface as viewed in FIG. 6) of a structural member 11 of flat-plate form. A perforated plate 13 as a surface material is bonded to the upper surface (as viewed) of the cellular structural material 12. Thus the conventional composite material panel is constituted.

The perforated plate 13 has formed therein a large number of holes of various diameters for enhancing the noise suppression effect of the panel. An example of a material used for the plate 13 is a metal. Another example is porous woven material composite materials.

However, when perforated materials such as those of the above mentioned examples of the prior art are used for the perforated plate 13, the aforedescribed problems associated with the prior art are encountered.

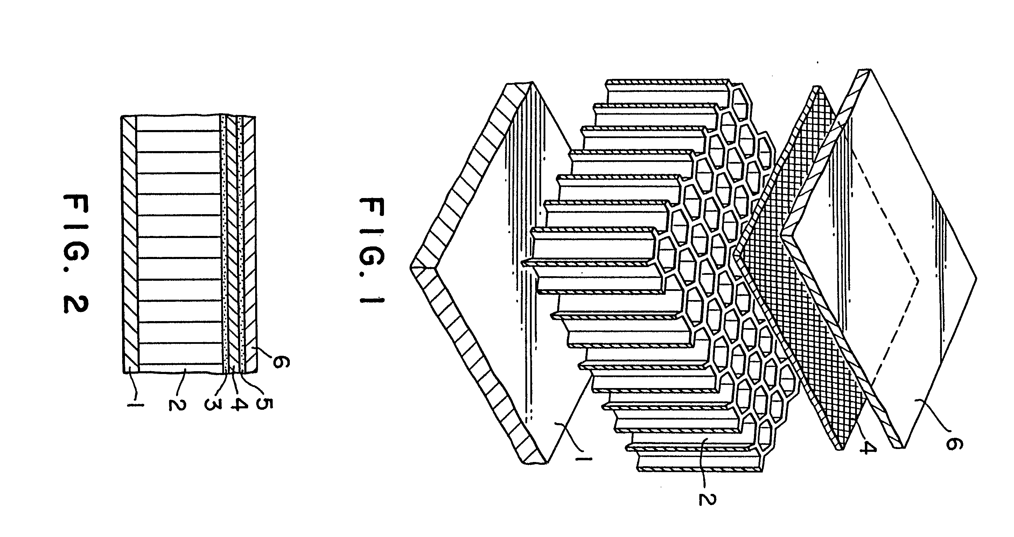

These problems have been overcome by the present invention, which will now be described in detail with respect to a preferred embodiment thereof in conjunction with FIGS. 1, 2, 3, 4 and 5.

Referring first to FIGS. 1 and 2, the embodiment of the composite panel shown therein has, on one outer side, a structural member 1 in the form of a flat sheet or plate. On the inner surface of the structural member 1 is bonded a cellular structural member 2 comprising a composite honeycomb. The structural member 1 is principally a member for bearing loads. The cellular structural member 2 is a member having cavities functioning as Helmholtz resonators.

A perforated sheet 4 of composite material is bonded by an adhesive layer 3 to the other surface (upper surface as viewed in FIGS. 1 and 2) of the cellular structural member 2. A surface material 6 is bonded to the upper surface of the composite material perforated sheet 4 by an adhesive layer 5 interposed therebetween. The surface material 6 is processed so as to exhibit acoustic resistance. Thus the panel produces an even larger noise suppressing effect.

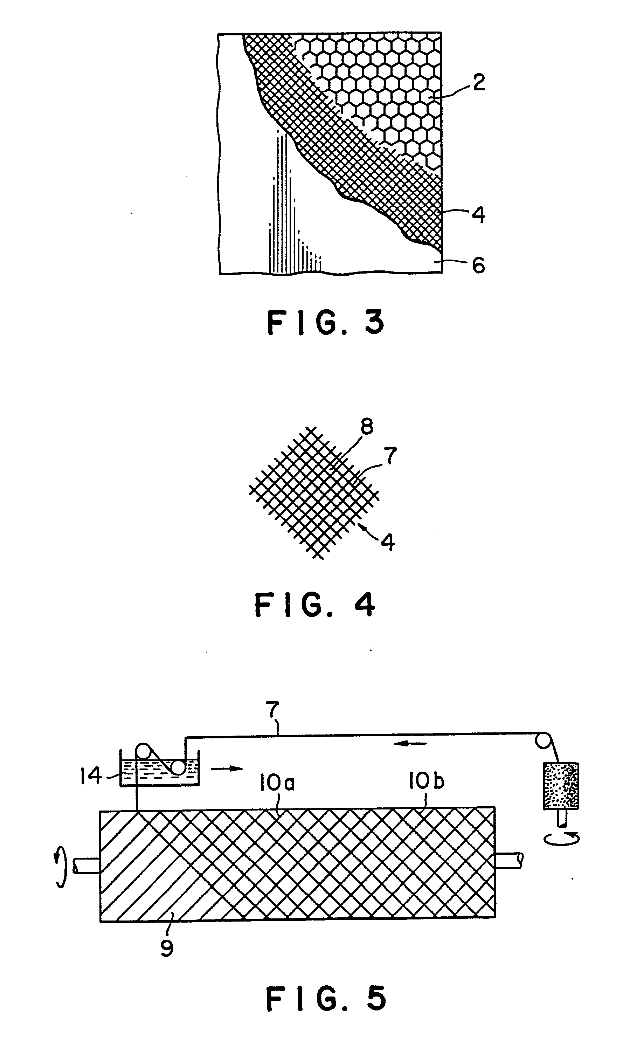

The composite material perforated sheet 4 is in the form of a meshwork as shown in FIG. 4. The perforated sheet 4 is formed by a so-called filament winding process.

As shown in FIG. 5, in the filament winding process, a roving 7 of filament form is wound continuously and diagonally around the outer surface of a rotating mandrel 9 thereby to form a helical filament winding 10a thereon in one helical direction. The roving 7 is impregnated with a resin in a resin bath 14. Then the roving 7 is wound diagonally in another direction as indicated at 10b around the mandrel 9 to intersect the first winding 10a. Thus a cylindrical meshwork is formed. The cylindrical meshwork thus formed is removed from the mandrel 9, cut and spread out into a desired state such as a planar state as shown in FIG. 4. By this method, the size of the mesh 8 between the roving material filaments 7, 7, ... 7 can be adjusted and varied in a very simple manner. That is, the size of the mesh 8 can be adjustably varied in a simple manner merely by varying the helical winding pitches of the roving material 7.

As is known, the feature of freely adjusting as desired the mesh size of the composite material perforated sheet 4 adds to the effectiveness of the noise suppression effect. The composite material is, for example, resin impregnated carbon.

Thus, as described above, a composite material perforated sheet 4 is formed according to this invention by a filament winding process in which the mesh size can be adjusted in a simple manner. The perforated sheet 4 thus obtained is bonded to the upper surface of the cellular structural member 2. Therefore a composite material panel with high noise suppressing effect can be produced in a simple manner. Furthermore, the composite material perforated sheet 4 of mesh form is used. Therefore the weight of the panel can be greatly reduced.

As described above, in accordance with the present invention, a composite material perforated sheet is formed by a filament winding process in which the mesh size can be simply adjusted. The perforated sheet thus obtained is bonded to the surface of a cellular structural member. Therefore production process steps become simple. Moreover, a panel with high noise suppressing effect can be obtained.

While the presently preferred embodiment of the present invention has been shown and described, it is to be understood that the disclosure is for the purpose of illustration and that various changes and modifications may be made without departing from the scope of the invention as set forth in the appended claims.

**Claims**

1. A panel of a composite material, having a structural member (1) in the form of a plate, a cellular structural member (2) in the form of a board bonded at a first surface thereof to said structural member (1), and a perforated sheet (4) bonded to a second surface opposite to said first planar surface of the cellular structural member: characterized in that said perforated sheet is provided with an adjustable mesh diameter of filaments (7) of the composite material.

2. The panel as claimed in claim 1, further comprising a surface material (6) bonded to the surface of said meshworlk (4) opposite to said cellular structural member (2).

3. A process for producing a panel of a composite material, comprising the steps of bonding a cellular structural member (2) at a first surface thereof to a surface of a structural member (1) of plate form, and bonding a perforated sheet (4) to a second surface opposite to said first surface of said cellular structural member (2): characterized by a step of forming said perforated sheet into a meshwork (4) of filaments (7) of a composite material by a filament winding process in which the mesh size of the meshwork (4) is adjustably varied for maximum noise suppression effect.

4. The process as claimed in claim 3, wherein said filament winding process comprises the steps of first winding a roving (7) of filament form continuously and diagonally around the outer surface of a rotating mandrel (9) thereby to form a first helical filament winding (10a) thereon in a first helical direction; second winding the roving diagonally in a second helical direction opposite to said first helical direction around the mandrel to form thereon a second helical filament winding (10b) intersecting said first helical filament winding (10a) thereby to form a cylindrical meshwork (4); varying the helical pitches of said first and second helical filament windings (10a, 10b) to adjust the mesh size of the meshwork for said maximum noise suppression effect; removing said cylindrical meshwork (4) from the mandrel (9); cutting the meshwork; and spreading the meshwork (4) into a desired state.

FIG. 1

FIG. 2

FIG. 3

FIG. 4

FIG. 5

F I G. 6